# EUROPEAN PATENT SPECIFICATION

(11) **EP 2 747 612 B1**
(45) Date of publication and mention of the grant of the patent: **17.06.2015**
(21) Application number: 13725765.5
(22) Date of filing: 04.04.2013
(51) Int. Cl.: A47J 31/36

(54) **POSITIONING AND EXTRACTION ASSEMBLY FOR A MACHINE FOR THE PREPARATION OF A BEVERAGE USING CAPSULES**
POSITIONIERUNGS-UND EXTRAKTIONSANORDNUNG FÜR EINE MASCHINE ZUR HERSTELLUNG EINES GETRÄNKS UNTER VERWENDUNG VON KAPSELN
ENSEMBLE DE POSITIONNEMENT ET D'EXTRACTION POUR UNE MACHINE POUR LA PRÉPARATION D'UNE BOISSON À L'AIDE DE CAPSULES

(30) Priority: 06.04.2012 IT TO20120304
(43) Date of publication of application: 02.07.2014
(73) Proprietor: Luigi Lavazza S.p.A., 10154 Torino (IT)
(72) Inventor: DE MANGO, Carlo, I-10147 Torino (IT); LIATTI, Andrea, I-10123 Torino (IT)
(74) Representative: Quinterno, Giuseppe
(86) International application number: PCT/IB2013/052700
(87) International publication number: WO 2013/150480

(56) References cited:
- WO-A1-2005/058111
- WO-A1-2008/096385
- WO-A2-2008/142663

## Description

The present invention relates to a positioning and extraction assembly for a machine for the preparation of a beverage, particularly espresso coffee, using capsules having a body provided with a protruding flange.

More specifically, the invention relates to a positioning and extraction assembly of the type comprising:
first and second portions, at least one of which is movable with respect to the other one along a predetermined direction of movement, between an open position in which a capsule can be introduced therebetween, and a closed position in which said capsule is enclosed in an infusion chamber for the preparation of a beverage;
the assembly comprising, between said first and second portions, means for positioning the capsule, including two opposite rotatable gates with which respective resilient opposing means are associated, which tend to keep them in a working position in which they are capable of forming guides or seats for receiving and retaining in an intermediate waiting position a capsule introduced into the assembly, said capsule being able to open said gates and pass beyond them when said portions of the assembly pass from the open position to the closed position, said gates being capable of preventing a return of the capsule to said intermediate position when said portions of the assembly return to the open position.

Patent application WO2005/058111A1 describes and illustrates a positioning and extraction assembly comprising means for positioning an introduced capsule, which include two opposing gates which can be translated in corresponding transverse seats and are associated with corresponding opposing coil springs. This solution has large overall dimensions in the transverse direction.

Patent application WO2008/142663 describes and illustrates a positioning and extraction assembly of the type specified above, with gates having an L-shaped cross section, associated with corresponding torsion springs.

This solution has the advantage of having smaller overall dimensions in the transverse direction. It also provides for the use of torsion springs formed from metal wire coils wound around the rotation pins of the gates. One end of each spring has to be threaded into a retaining aperture provided in a portion of the assembly, while the other has to be applied against a branch or wing of the associated gate.

Overall, this solution is rather costly to apply and requires relatively complicated assembly work.

One object of the present invention is therefore to provide a positioning and extraction assembly for a machine for the preparation of beverages using capsules which can be used in a more simple and economical way, and in which the capsule positioning means have a simplified structure and are easily assembled.

This and other objects are achieved according to the invention with a positioning and extraction assembly of the type defined above, characterized in that the resilient means associated with each of the aforesaid gates comprise a flexion spring including an essentially L- or V-shaped resilient strip, with an outer anchoring portion fixed to one of said portions of the assembly in an orientation which is at least approximately parallel to the aforesaid direction of movement, and an inner opposing portion which extends towards said direction of movement and bears against the associated gate on the side opposite the corresponding guide or seat for the capsule.

A resilient strip of this type can be made extremely conveniently and economically by simple cutting and bending means. It can also be conveniently fixed, either manually or automatically, to a portion of the positioning and extraction assembly, using one or more screws for example.

Further characteristics and advantages of the invention will be made clear by the following detailed description, provided purely by way of non-limiting example, with reference to the appended drawings, in which:
Figure 1 is a partial view, in axial section, of a positioning and extraction assembly according to the present invention;
Figure 2 is a sectional view taken along the line II-II of Figure 1;
Figure 3 is a partial sectional view taken along the line III-III of Figure 1;
Figures 4 to 6 are views similar to those of Figures 1 and 3, and show the same assembly in a different position;
Figure 7 is a sectional view similar to that of Figures 1 and 4, and shows the same assembly in a further position;
Figure 8 is a sectional view taken along the line VIII-VIII of Figure 7;
Figures 9 to 11 are views similar to those of Figures 2 and 5, and show the same assembly in three further positions;
Figure 12 is a partial sectional view of a second positioning and extraction assembly according to the present invention;
Figures 13 to 14 are views similar to that of Figure 12, and show the same assembly in two further positions;
Figure 15 is an enlarged view of a detail indicated by XV in Figure 12; and
Figure 16 is a perspective view showing a gate and the associated opposing spring for a positioning and extraction assembly according to the present invention.

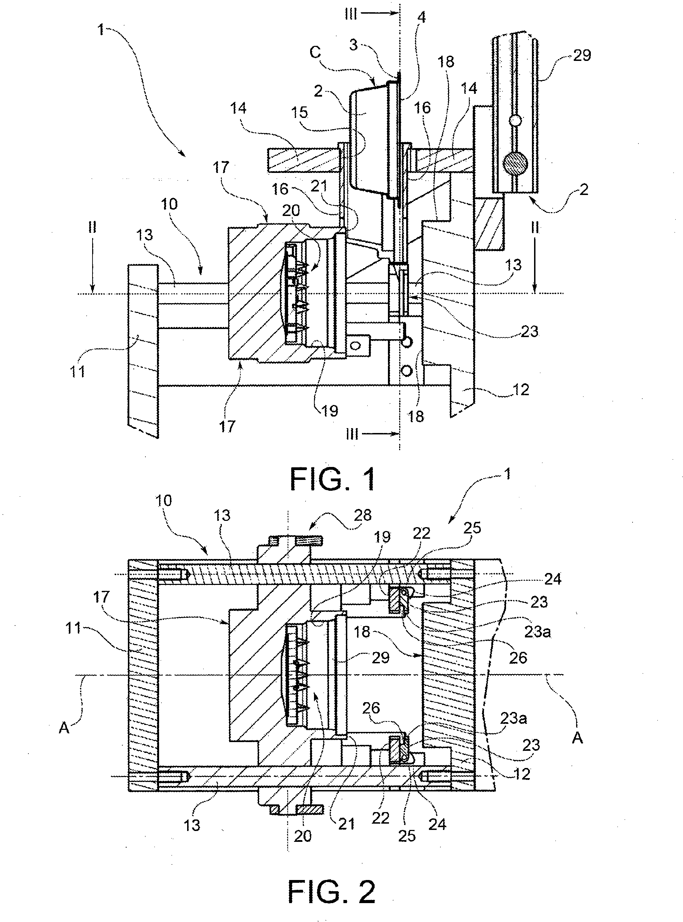

Figures 1 to 11 show a first embodiment of a positioning and extraction assembly 1 for a machine for the preparation of a beverage, particularly (but not exclusively) espresso coffee, using capsules which are, for example, of the type illustrated and indicated by C in Figure 1.

The capsule C may be, for example, of the type described and illustrated in patent EP 1 886 942 B1 held by the present applicant, and comprises a cup-shaped body 2, made of plastic material for example, having an integral flange 3 projecting radially outwards, to which a breakable sealing lid 4 is coupled.

However, the invention can also be used with capsules or pods of other known types.

In the embodiment shown in Figures 1 to 11, the assembly 1 comprises a supporting structure 10, which is stationary in use, including two facing ends 11 and 12 interconnected by a pair of parallel horizontal guide bars 13.

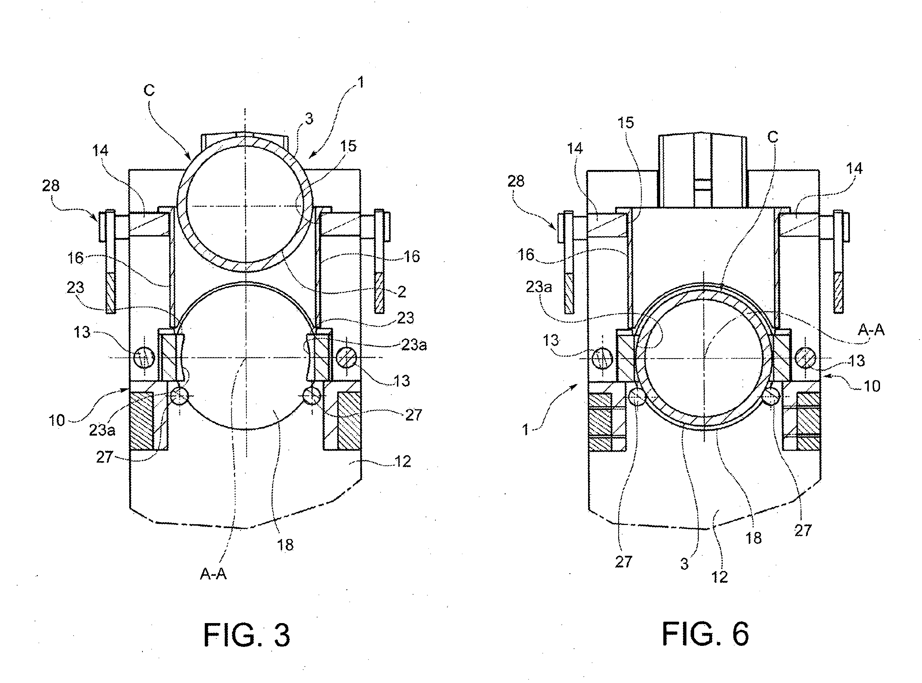

The stationary supporting structure 10 further comprises an upper plate 14 (Figures 1, 4 and 7) in which is formed an aperture 15 through which there extends a shaped guide conduit 16 whose cross section essentially matches the profile of a capsule C (see also Figures 3 and 6).

In the illustrated embodiment, the conduit 16 extends in an essentially vertical direction, and a capsule C can be introduced through its upper mouth so as to descend by gravity towards underlying positioning devices, which are described more fully below.

In the supporting structure 10, the assembly 1 comprises two portions which interact in use, indicated by 17 and 18. In the illustrated embodiment, the portion 18 is stationary, and in particular it is integral with the end 12 of the supporting structure 10, while the portion 17 can be translated, along the guide bars 13, in a direction of movement indicated by A-A in Figure 2.

The stationary portion 18 of the assembly 1 is also provided, in a known way, with one or more perforation elements adapted to puncture the lid 4 of a capsule C.

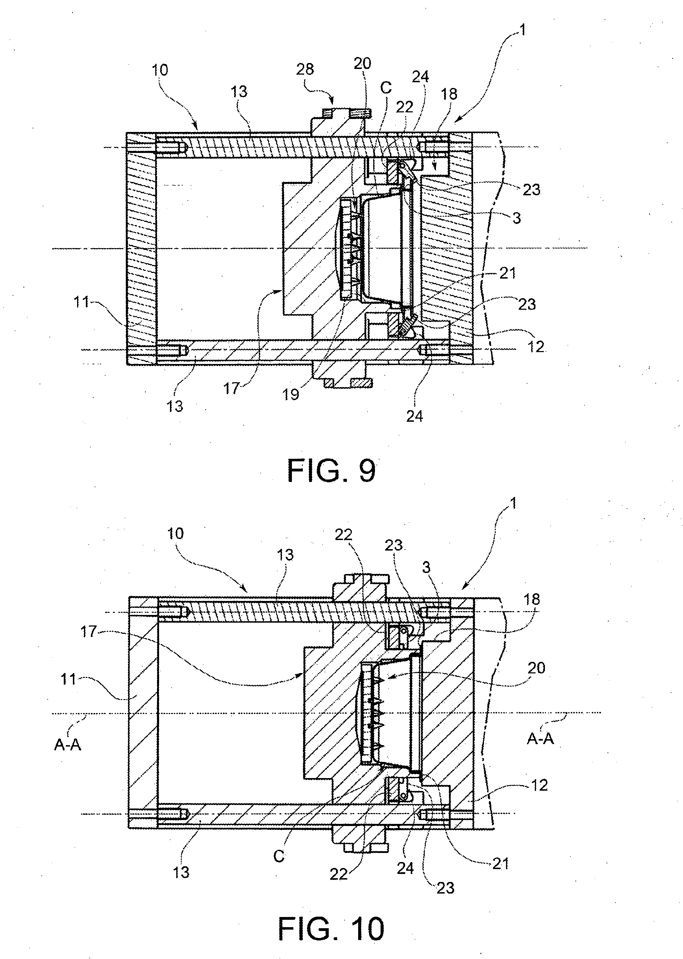

In the illustrated embodiment, the movable portion 17 of the assembly 1 is essentially cup-shaped, with its cavity 19 facing the stationary portion 18. A perforation device 20, intended to puncture the base of the cup-shaped body 2 of a capsule C, is housed in this cavity 19, as shown in particular in Figure 10.

The mouth of the movable portion 17 has an annular front edge 21, intended to interact with the projecting flange 3 of a capsule C, as described more fully below.

The movable portion 17 can be moved between an open position and a closed position.

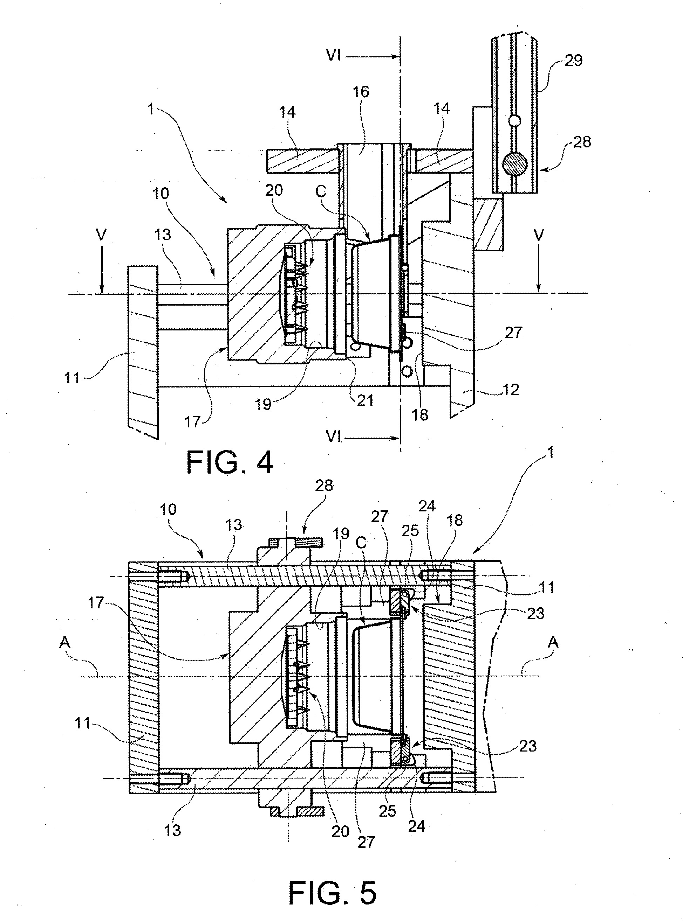

In the open position, shown in Figures 1 to 3, the capsule C can be introduced into the conduit 16 so as to descend and be received and retained in an intermediate waiting position, shown in Figures 4 and 5.

In the closed position, shown in Figure 10, the capsule C is enclosed, in a liquid-tight way, in the infusion chamber which is formed between the portions 17 and 18, for the preparation of the beverage.

With reference to Figures 1 to 3, two transverse stop walls 22, integral with the stationary supporting structure 10, are provided between the two portions 17 and 18 of the infusion assembly, on horizontally opposite sides of the direction A-A (see, in particular, Figure 2). These walls 22 are transversely separated by a distance greater than the outside diameter of the part of the movable portion 17 facing the stationary portion 18.

Corresponding rotatable gates 23, associated with corresponding opposing springs 24 operating by flexion, are mounted in the proximity of the walls 22, in the stationary supporting structure 10.

In the illustrated embodiment, the gates 23 are positioned between the walls 22 and the stationary portion 18 of the assembly 1, and are rotatable about corresponding pins 25 whose axes are essentially vertical. The arrangement is such that the opposing springs 24 tend to hold the corresponding gates 23 against the associated transverse walls 22.

The gates 23 and the associated stop walls 22 are shaped in such a way that, when the movable portion 17 is in the open position (Figures 1 to 3), guide grooves 26 are formed between their transversely inner ends, these grooves being adapted to receive and axially retain the flange 3 of a capsule C introduced into the conduit 16. In the embodiment shown in Figures 1 to 11, the guide grooves 26 are formed between flat surfaces of the walls 22, facing the stationary portion 18, and a corresponding indentation provided in the gates 23.

As is shown more fully in Figures 3 and 6, the gates 23 have corresponding transversely inner profiles 23a, which are preferably curved. The distance between these opposing profiles 23a is smaller than the outside diameter of the flange 3 of a capsule C.

In the embodiment according to Figures 1 to 11, the gates 23 described above are associated with parallel horizontal stop bars 27 placed below them (see, in particular, Figures 1, 2 and 3, 6), these bars being integral with the stationary supporting structure 10.

With reference to Figures 1 and 2, the bars 27 extend under the conduit 16 and the stop walls 22. In particular, the ends of these bars 27 facing the stationary portion 18 extend to a point under the guide grooves 26 formed between the gates 23 and the associated stop walls 22.

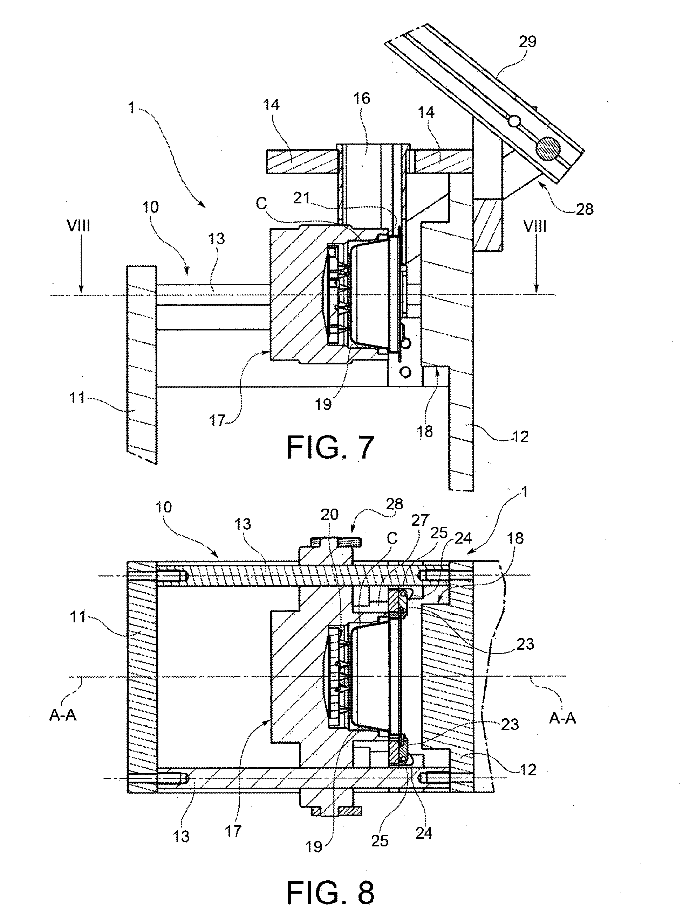

The arrangement is therefore such that, when the movable portion 17 of the assembly is in the open position, a capsule C introduced into the conduit 16 can descend by gravity, and the transversely outer portions of its flange 3 are introduced into, and guided further downwards by, the grooves 26, until the flange 3 of the capsule bears against the bars 27, as shown in Figures 4 to 6. In this condition, the capsule C is in an intermediate waiting position, in which it is substantially coaxial with the movable portion 17 and the associated stationary portion 18. With a capsule C placed in this waiting position, the movable portion 17 can be moved towards the stationary portion 18, as illustrated in the sequence of Figures 7, 8, 9 and 10, until it reaches the closed position of Figure 10.

The movable portion 17 can be moved by manual action, imparted through a mechanism 28 of a type which is essentially known, which can be operated by means of a lever 29. Alternatively, the movable portion 17 can be moved by motorized means.

As a result of the movement towards the stationary portion 18, the movable portion 17 is progressively coupled to the capsule C which is retained in the waiting position shown in Figures 4 to 6.

In the illustrated system, the body 2 of the capsule C has an essentially trunco-conical lateral wall, and an annular surface 29 is formed in the cavity 19 of the movable portion 17 of the assembly 1 (Figures 1 and 2), this surface being capable of engaging a corresponding portion of the lateral wall of the capsule C before the front edge 21 of the movable portion 17 comes into engagement with the projecting flange 3 of the capsule, as shown essentially in Figure 8.

As it continues to move, the movable portion 17 drives the capsule C with it towards the stationary portion 18, and the flange 3 of the capsule engages the gates 23, causing them to rotate against the action of the associated opposing springs 24, as shown in Figure 9.

The further advancement of the movable portion 17 causes the capsule C to pass beyond the gates 23, which are then returned to their initial operating position by the associated opposing springs 24, as shown in Figure 10.

On reaching the closed position, shown in Figure 10, the flange 3 of the capsule C is gripped in a sealed way between the stationary portion 18 and the front edge 21 of the movable portion 17. In this condition, the base of the body 2 of the capsule C is punctured by the perforation device 20 provided in the cavity of the movable portion 17.

In a way which is not illustrated, the lid 4 of the capsule C is also punctured in this condition, by the at least one perforation device which is conveniently provided on the stationary portion 18.

The present invention can also be applied in machines using capsules having previously perforated lids, for example capsules of the type described in patent EP 0 584 314 B1 in the name of the present applicant.

In the condition shown in Figure 10, a chamber is formed between the movable portion 17 and the stationary portion 18, in which the desired beverage can be made by infusion. This beverage can be dispensed towards a collecting container such as a cup, through a dispensing conduit associated with the movable portion 17.

When the beverage has been dispensed, the movable portion 17 is returned, manually or by motorized means, towards the open position.

In the initial step of this return movement, the capsule C may tend to follow the movable portion 17, because the perforation devices 20 which have penetrated into the base of the capsule body may drag the capsule with them.

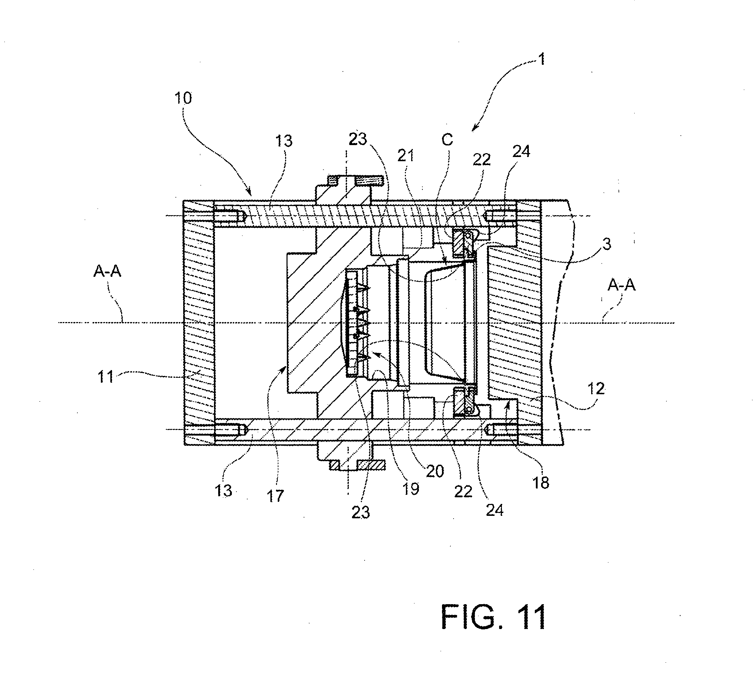

However, as soon as the flange 3 of the spent capsule C comes to bear against the gates 23, as shown in Figure 11, the capsule C is axially arrested, and is separated from the movable portion 17 which continues to move towards the open position.

In this way, the capsule C is detached from the movable portion 17.

In the condition of Figure 11, the flange 3 of the spent capsule C extends beyond the end of the stop bars 27 described above, and can therefore fall by gravity towards an underlying collecting receptacle which is not shown.

In the embodiment described above with reference to Figures 1 to 11, the stop walls 22 and the rotatable gates 23 and the associated springs 24 are integral with the stationary portion 18 of the positioning and extraction assembly 1.

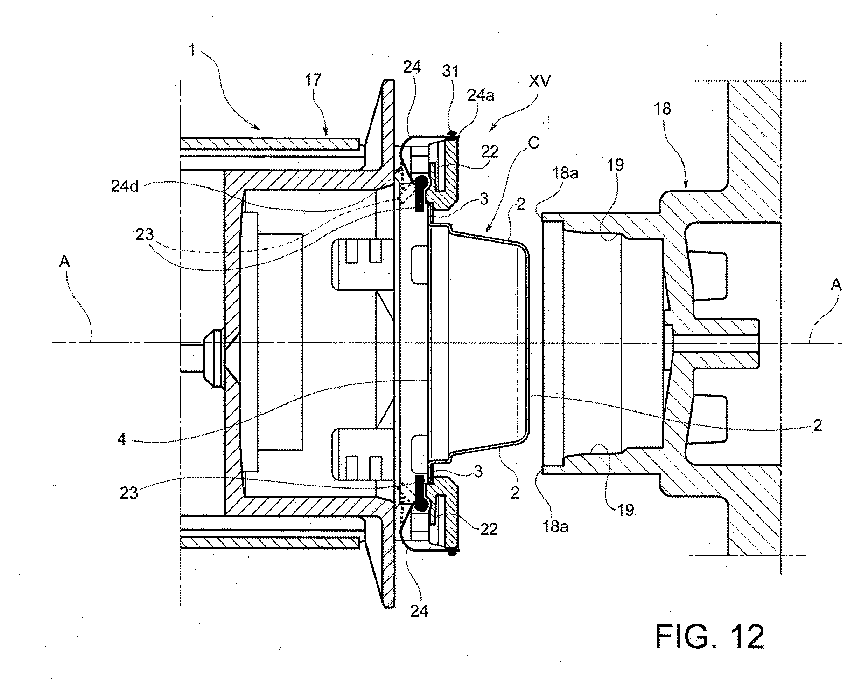

Figures 12 to 15 show another embodiment in which these members 22-24 are, conversely, integral with the movable portion 17 of the assembly 1.

In Figures 12 to 15, parts and elements described previously have been given the same reference numerals as those used previously.

In the embodiment shown in Figures 12-15, it is the stationary portion 18 that has a cavity 19 intended to receive a capsule C within it.

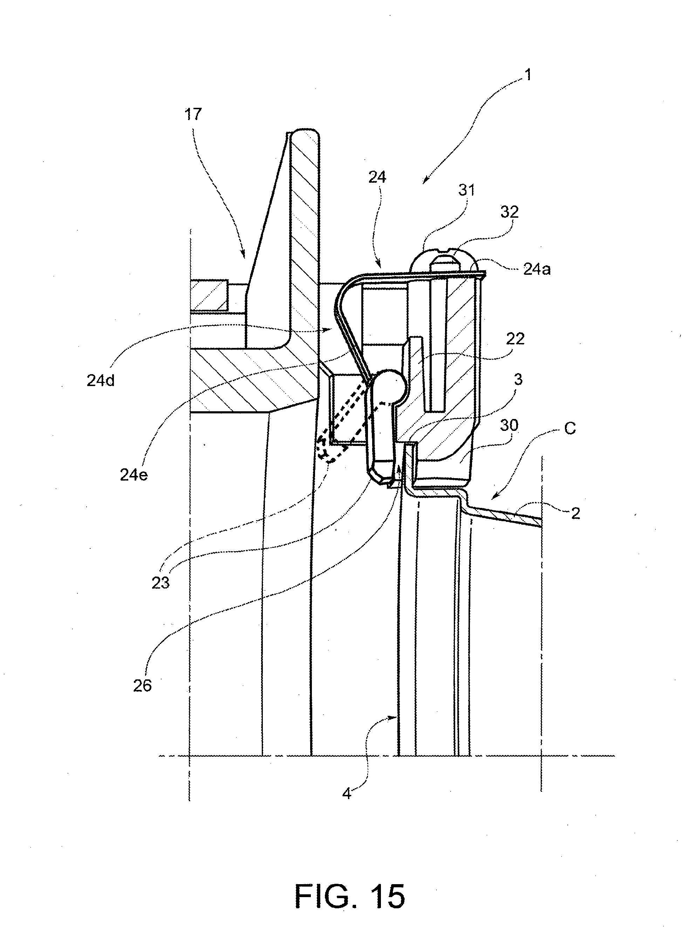

As is shown more fully in Figure 15, the stop walls 22, the gates 23 and the associated opposing springs 24 are carried by the movable portion 17 of the assembly 1. In this case also, guide grooves 26 are formed between the stop walls 22 and the gates 23 for diametrically opposite portions of the flange 3 of the capsule C.

In this embodiment, the capsule C is vertically retained in the intermediate waiting position of Figure 15 by means of retaining appendages 30 (Figure 15) fixed to the movable portion 17 of the assembly 1, under the stop walls 22 and the guide grooves 26. However, these retaining appendages 30 do not extend axially beyond the gates 23.

In the variant shown in Figures 12 to 15, a capsule C is introduced into the guide grooves 26 formed between the gates 23 and the associated stop walls 22, and descends by gravity therein.

The movable portion 17 is then moved towards the stationary portion 18.

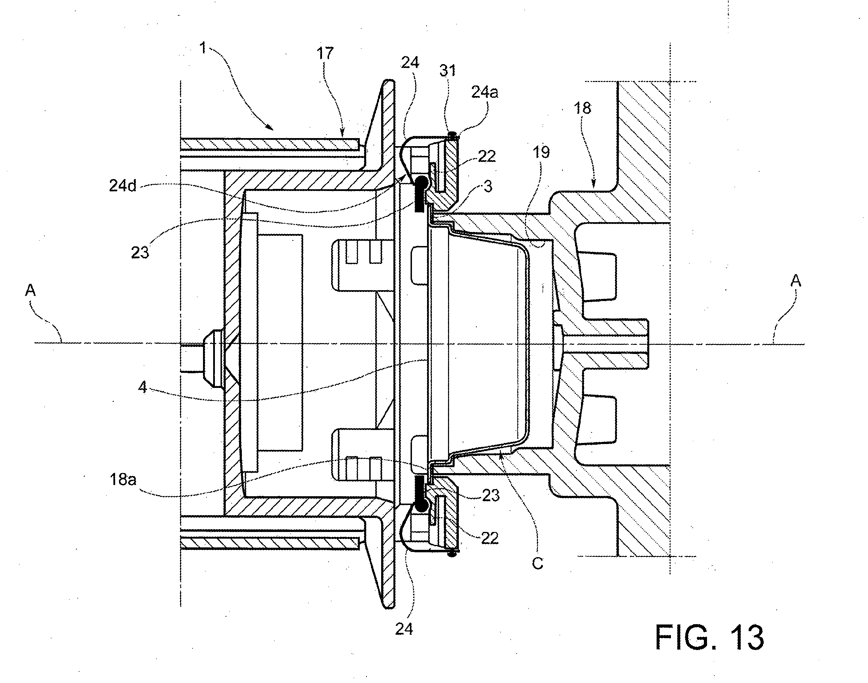

In the course of this movement, which takes place along the direction A-A, the body 2 of the capsule C penetrates progressively into the cavity 19 of the stationary portion 18, as shown, for example, in Figure 13.

The front edge 18a of the stationary portion, which extends around the mouth of the cavity 19, engages the flange 3 of the capsule C at a certain point.

The further movement of the movable portion 17 towards the stationary portion 18 causes the gates 23 to be opened by diametrically opposite portions of the flange 3 of the capsule C, and then causes said flange to pass beyond these gates 23.

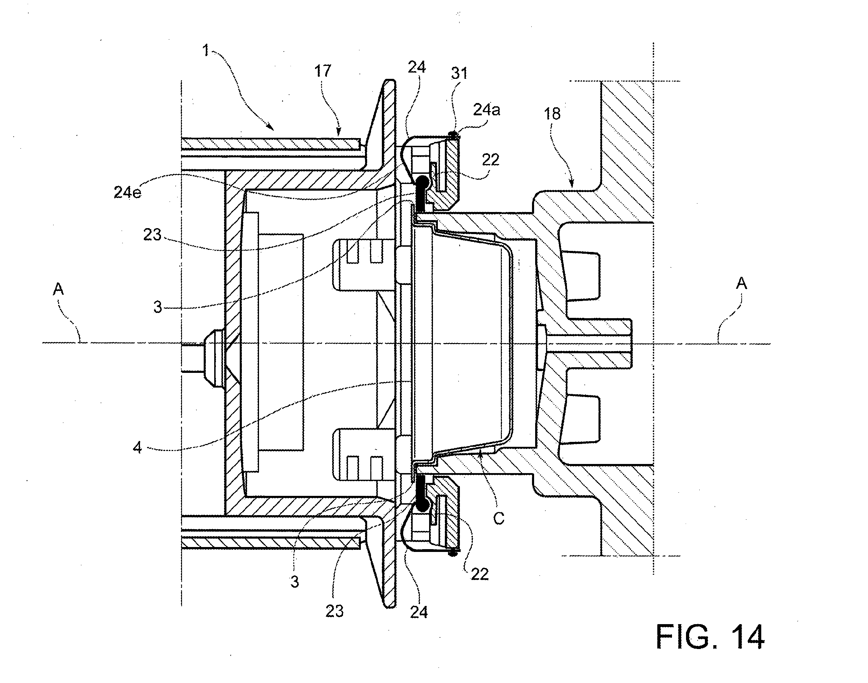

When the flange 3 of the capsule has passed beyond the gates 23 (Figure 14), these gates move back to bear against the associated stop walls 22, under the action of the corresponding opposing springs 24.

The movement of the movable portion 17 continues until the infusion chamber is closed, after which the beverage is infused and is dispensed towards a collecting receptacle.

When the beverage has been dispensed, the movable portion 17 is returned towards the open position, and its gates 23 detach the spent capsule C, causing it to be extracted from the chamber 19 of the stationary portion 18. The flange 3 of the spent capsule C is then translated into a position in which its flange 3 no longer bears on the retaining appendages 30, and the spent capsule C is therefore free to fall by gravity towards a receiving receptacle.

In addition to the embodiments described above, in which only one of the two portions 17 and 18 is movable with respect to the other, it is possible to provide further embodiments in which both of these portions are movable with respect to a stationary supporting structure.

Conveniently, the opposing springs 24 associated with the gates 23 are springs of the flexion type, as mentioned above.

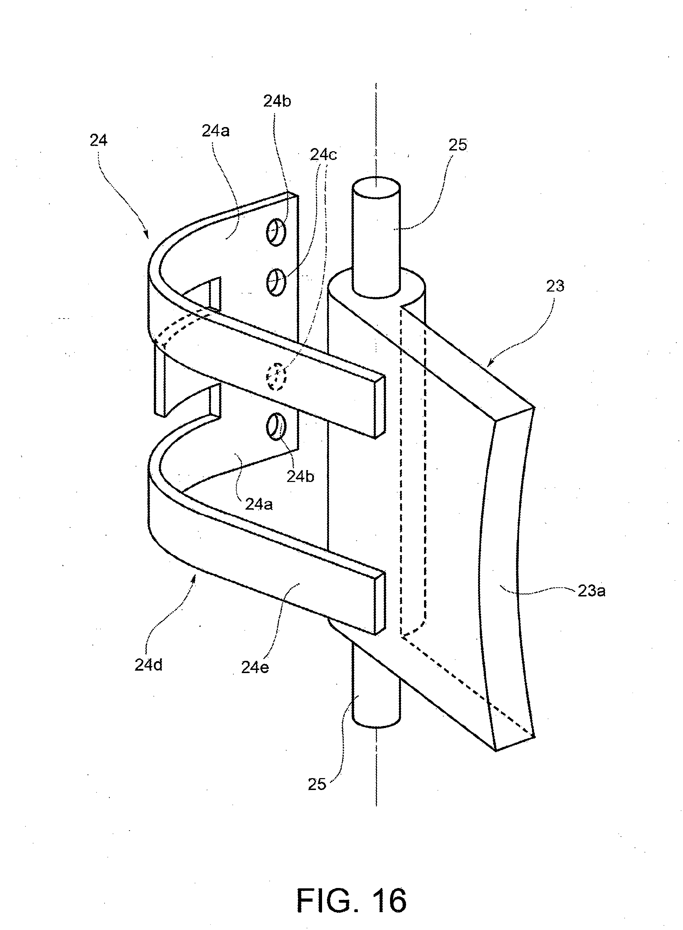

An advantageous embodiment of springs of this type will now be described with reference to Figure 16. This solution can be used in both of the embodiments described above with reference to Figures 1-11 and 12-15 respectively, and in embodiments in which both of the portions 17 and 18 are movable.

In the embodiment according to Figure 16, the opposing spring 24 comprises a curved resilient strip which, when viewed from above, is essentially L-shaped or V-shaped, with a rounded angle (see also, for example, Figure 15).

The strip 24 has an outer anchoring portion 24a which is generally fixed to one of the two portions 17, 18 of the assembly 1, in an orientation at least approximately parallel to the direction of movement A-A.

In the embodiment shown in Figures 15 and 16, the anchoring portion 24a of the strip 24 has a pair of holes 24b, for the passage of corresponding fixing screws 31 (Figure 15), and two further apertures 24c, for the engagement of corresponding centring projections 32 of the portion of the assembly 1 to which the springs 24 are anchored.

Each strip spring 24 also has an inner opposing portion, indicated by 26d in Figures 15 and 16, which extends towards the aforesaid direction of movement A-A and bears against the associated gate 23 on the side opposite the corresponding guide or seat 26 for the capsule C. In the embodiment shown in Figure 16, the inner opposing portion 24d of the strip spring 24 comprises two essentially parallel branches or arms 24e, the distal ends of which bear against vertically spaced portions of the associated gate 23, preferably in the proximity of the axis of rotation defined by the pin 25.

The springs 24 made in the way described above enable the transverse overall dimensions of the assembly 1 to be extremely limited, and can be made in an extremely simple and economical way. These springs can also be mounted on the movable or stationary portion of the assembly in a highly convenient way, either by manual assembly or by automatic assembly.

Clearly, provided that the principle of the invention is retained, the forms of application and the details of embodiment can be varied widely from what has been described and illustrated purely by way of non-limiting example, without thereby departing from the scope of protection of the invention as defined by the attached claims.

## Claims

1. Positioning and extraction assembly (1) for a machine for the preparation of a beverage using capsules (C) having a body (2) provided with a protruding flange (3), the assembly (1) comprising:
first and second portions (17, 18), at least one (17) of which is movable with respect to the other one (18) between an open position in which a capsule (C) can be introduced therebetween, and a closed position in which said capsule (C) is enclosed in an infusion chamber (19) for the preparation of a beverage;
the assembly (1) comprising, between said first and second portions (17, 18), means for positioning the capsule (C), including two opposite, rotatable, gates (23), with which respective resilient opposing means (24) are associated, which tend to keep them in a working position in which they are capable of forming, at least in part, guides or seats (26) for receiving and retaining in an intermediate waiting position a capsule (C) introduced into the assembly (1), said capsule (C) being able to open said gates (23) and pass beyond them, when said portions (17, 18) of the assembly (1) pass from the open position to the closed position, said gates being capable of preventing a return of the capsule (C) to said intermediate position when said portions (17, 18) of the assembly (1) return to the open position;
the assembly (1) being **characterized in that** the resilient means associated with each of said gates (23) comprise a flexion spring including an essentially L- or V-shaped resilient strip (24), with an outer anchoring portion (24a) fixed to one of said portions (17, 18) of the assembly (1) in an orientation which is at least approximately parallel to said direction of movement (A-A), and an inner opposing portion (24d) which extends towards said direction of movement (A-A) and bears against the associated gate (23) on the side opposite the corresponding guide or seat (26) for the capsule (C).

2. Positioning and extraction assembly according to Claim 1, wherein said gates (23) and the associated opposing springs (24) are carried by a stationary portion (18) of the assembly (1).

3. Positioning and extraction assembly according to Claim 1, wherein said gates (23) and the associated opposing springs (24) are carried by a movable portion (17) of the assembly (1).

4. Positioning and extraction assembly according to one of the preceding claims, wherein said means for positioning the capsule (C) comprise at least one stop member (27; 30) fixed with respect to the portion (18; 17) of the assembly (1) to which said gates (23) and the associated opposing springs (24) are connected, said stop member (27; 30) being adapted to support a capsule (C) introduced into the assembly (1) until the point when said gates (23) are opened, and to allow the spent capsule (C) to fall when said portions (17, 18) of the assembly (1) return to the open position.

5. Positioning and extraction assembly according to any of the preceding claims, wherein the aforesaid inner opposing portion (27d) of each resilient strip (24) comprises a pair of branches or arms (24e) which are at least approximately parallel and bear on vertically spaced portions of the corresponding gate (23).

## Patentansprüche

1. Positionierungs- und Extraktionsanordnung (1) für eine Maschine zur Zubereitung eines Getränks unter Verwendung von Kapseln (C), die einen mit einem vorspringenden Flansch (3) versehenen Körper (2) aufweisen, wobei die Anordnung (1) aufweist:
erste und zweite Abschnitte (17,18), von denen mindestens einer (17) bezüglich des anderen (18) bewegbar ist zwischen einer offenen Position, in welcher eine Kapsel (C) zwischen ihnen eingeführt werden kann, und einer geschlossenen Position, in welcher die Kapsel (C) in einer Aufgießkammer (19) zur Zubereitung eines Getränks eingeschlossen ist;
wobei die Anordnung (1) zwischen dem ersten und zweiten Abschnitt (17,18) Einrichtungen zum Positionieren der Kapsel (C) aufweist, die zwei gegenüberliegende drehbare Tore (23) mit jeweils zugehörigen elastischen Gegenwirkungseinrichtungen (24) aufweisen, die bestrebt sind, sie in einer Arbeitsposition zu halten, in welcher sie fähig sind, zumindest teilweise Führungen oder Sitze (26) zum Aufnehmen und Halten einer in die Anordnung eingeführten Kapsel (C) in einer Wartezwischenposition zu bilden, wobei die Kapsel (C) die Tore (23) öffnen und an ihnen vorbei gehen kann, wenn die Abschnitte (17,18) der Anordnung (1) von der offenen Position in die geschlossene Position übergehen, wobei die Tore eine Rückkehr der Kapsel (C) in die Zwischenposition verhindern können, wenn die Abschnitte (17,18) der Anordnung (1) in die offene Position zurückkehren;
wobei die Anordnung (1) **dadurch gekennzeichnet ist, dass** die zu jedem der Tore (23) zugehörigen elastischen Einrichtungen eine Biegefeder aus einem im Wesentlichen L- oder V-förmigen elastischen Streifen (24) aufweisen, mit einem äußeren Verankerungsabschnitt (24a), der in einer Orientierung, die mindestens ungefähr parallel zu der Bewegungsrichtung (A-A) ist, an einem der Abschnitte (17,18) der Anordnung (1) befestigt ist, und mit einem inneren Gegenwirkungsabschnitt (24d), der sich zu der Bewegungsrichtung (A-A) erstreckt und an der - bezüglich der entsprechenden Führung oder Sitz (26) für die Kapsel (C) - anderen Seite gegen das zugehörige Tor (23) drückt.

2. Positionierungs- und Extraktionsanordnung nach Anspruch 1, wobei die Tore (23) und die zugehörigen Gegenwirkungsfedern (24) von einem stationären Abschnitt (18) der Anordnung (1) getragen werden.

3. Positionierungs- und Extraktionsanordnung nach Anspruch 1, wobei die Tore (23) und die zugehörigen Gegenwirkungsfedern (24) von einem beweglichen Abschnitt (17) der Anordnung (1) getragen werden.

4. Positionierungs- und Extraktionsanordnung nach einem der vorstehenden Ansprüche, wobei die Einrichtungen zum Positionieren der Kapsel (C) mindestens ein Anschlagelement (27;30) aufweisen, das bezüglich desjenigen Abschnitts (18;17) der Anordnung (1), an welchem die Tore (23) und die zugehörigen Gegenwirkungsfedern (24) angebracht sind, befestigt ist, wobei das Anschlagelement (27;30) konfiguriert ist, eine in die Anordnung (1) eingeführte Kapsel (C) bis zu dem Punkt, wenn die Tore (23) geöffnet werden, zu tragen, und ein Herabfallen der verbrauchten Kapsel (C) zu erlauben, wenn die Abschnitte (17,18) der Anordnung (1) in die offene Position zurückkehren.

5. Positionierungs- und Extraktionsanordnung nach einem der vorstehenden Ansprüche, wobei der innere Gegenwirkungsabschnitt (27d) jedes elastischen Streifens (24) ein Paar Zweige oder Arme (24e) aufweist, die mindestens ungefähr parallel sind und gegen vertikal beabstandete Abschnitte des entsprechenden Tors (23) drücken.

## Revendications

1. Ensemble de positionnement et d'extraction (1) pour une machine servant à la préparation d'une boisson au moyen de capsules (C) comportant un corps (2) doté d'une collerette saillante (3), l'ensemble (1) comprenant :
des première et seconde parties (17, 18), dont au moins une (17) est mobile vis-à-vis de l'autre (18) entre une position ouverte, dans laquelle une capsule (C) peut être introduite entre elles, et une position fermée, dans laquelle ladite capsule (C) est enfermée dans une chambre d'infusion (19) pour la préparation d'une boisson ;
l'ensemble (1) comprenant, entre lesdites première et seconde parties (17, 18), des moyens servant au positionnement de la capsule (C), comprenant deux butées (23) rotatives opposées, auxquelles sont associés des moyens opposés (24) élastiques respectifs, qui tendent à les maintenir dans une position active, dans laquelle elles ont la capacité de former, au moins en partie, des guides ou sièges (26) pour recevoir et retenir, dans une position d'attente intermédiaire, une capsule (C) introduite dans l'ensemble (1), ladite capsule (C) pouvant ouvrir lesdits butées (23) et les franchir, lorsque lesdites parties (17, 18) de l'ensemble (1) passent de la position ouverte à la position fermée, lesdits butées ayant la capacité d'empêcher un retour de la capsule (C) à ladite position intermédiaire lorsque lesdites parties (17, 18) de l'ensemble (1) reviennent à la position ouverte ;
l'ensemble (1) étant **caractérisé en ce que** les moyens élastiques associés à chacune desdites butées (23) comprennent un ressort de flexion comprenant une bande élastique (24) présentant essentiellement la forme d'un L ou d'un V, comportant une partie d'ancrage extérieure (24a) fixée à l'une desdites parties (17, 18) de l'ensemble (1) dans une orientation qui est au moins approximativement parallèle à ladite direction de mouvement (A-A), et une partie opposée intérieure (24d) qui s'étend vers ladite direction de mouvement (A-A) et est en appui contre la butée(23) associée sur le côté opposé au guide ou siège (26) correspondant pour la capsule (C).

2. Ensemble de positionnement et d'extraction selon la revendication 1, dans lequel lesdits butées (23) et les ressorts (24) opposés associés sont portés par une partie stationnaire (18) de l'ensemble (1).

3. Ensemble de positionnement et d'extraction selon la revendication 1, dans lequel lesdites butées (23) et les ressorts (24) opposés associés sont portés par une partie mobile (17) de l'ensemble (1).

4. Ensemble de positionnement et d'extraction selon l'une quelconque des revendications précédentes, dans lequel lesdits moyens servant au positionnement de la capsule (C) comprennent au moins un élément d'arrêt (27 ; 30) fixe vis-à-vis de la partie (18 ; 17) de l'ensemble (1) à laquelle lesdits butées (23) et les ressorts (24) opposés associés sont raccordés, ledit élément d'arrêt (27 ; 30) étant conçu pour supporter une capsule (C) introduite dans l'ensemble (1) jusqu'au moment où lesdits butées (23) sont ouvertes, et pour permettre la chute de la capsule usagée (C) lorsque lesdites parties (17, 18) de l'ensemble (1) reviennent à la position ouverte.

5. Ensemble de positionnement et d'extraction selon l'une quelconque des revendications précédentes, dans lequel ladite partie (27d) opposée intérieure de chaque bande élastique (24) comprend une paire de branches ou bras (24e) qui sont au moins approximativement parallèles et sont en appui sur des parties verticalement espacées de la butée (23) correspondante.
